# EUROPEAN PATENT SPECIFICATION

(11) **EP 2 664 760 B1**
(45) Date of publication and mention of the grant of the patent: **05.08.2015**
(21) Application number: 13166435.1
(22) Date of filing: 03.05.2013
(51) Int. Cl.: F01N 3/20

(54) **Heat dissipating structure of an adding valve**
Wärmeableitende Struktur eines Einspritzventils
Structure de dissipation de chaleur d'une valve d'injection

(30) Priority: 15.05.2012 JP 2012111610
(43) Date of publication of application: 20.11.2013
(73) Proprietor: TOYOTA JIDOSHA KABUSHIKI KAISHA, Toyota-shi, Aichi-ken, 471-8571 (JP)
(72) Inventor: Hashima, Takashi, Toyota-shi, Aichi-ken 471-8571 (JP)
(74) Representative: Winter, Brandl, Fürniss, Hübner, Röss, Kaiser, Polte - Partnerschaft mbB

(56) References cited:
- EP-A1- 1 582 712
- WO-A1-2007/073957
- WO-A1-2013/041218
- DE-A1-102008 055 190

## Description

### BACKGROUND OF THE INVENTION

### 1. Field of the Invention

The invention relates to a heat dissipating structure of an adding valve that adds a reducing agent into an exhaust duct of an internal combustion engine.

### 2. Description of Related Art

A selective reducing type NOx control system that selectively reduces and purifies NOx (oxides of nitrogen) discharged from an internal combustion engine, such as that described in Published Japanese Translation of PCT application No. 2009-520907 (JP-A-2009-520907) for example, is known. In this system, a NOx purifying catalyst is provided in an exhaust duct. NOx in the exhaust gas is selectively reduced to nitrogen and water, and thus purified, by injecting a reducing agent from an adding valve into the NOx purifying catalyst. The reducing agent may be urea aqueous solution or ammonia gas, for example.

In an exhaust gas control apparatus that uses the system described in JP-A-2009-520907, in order to protect the adding valve that injects the reducing agent from being harmed by the heat from high-temperature exhaust gas, the heat of the adding valve is dissipated through a heat dissipating member. More specifically, this heat dissipating member has therein a housing space for housing the adding valve, and the adding valve is arranged in this housing space. This structure enables the heat of the adding valve to be dissipated outside through the heat dissipating member.

With the heat dissipating structure of an adding valve described in JP-A-2009-520907, there is a gap between an outer peripheral surface of the adding valve and an inner peripheral surface of the housing space the heat dissipating member. Because the thermal conductivity of air is low, the heat of the adding valve is unable to be efficiently transferred to the heat dissipating member when this gap exists, so the heat of the adding valve is unable to be efficiently dissipated. WO 2013/041218 A1 (falling within the terms of Article 54(3) EPC and thus not relevant to the question inventive step) discloses a heat exchanger for a metering unit of an exhaust system.

The invention thus provides a heat dissipating structure of an adding valve capable of efficiently dissipating heat of the adding valve.

### SUMMARY OF THE INVENTION

One aspect of the invention relates to a heat dissipating structure of an adding valve, which includes an adding valve that adds a reducing agent into an exhaust duct of an internal combustion engine, and a heat dissipating member that dissipates heat of the adding valve. The heat dissipating member has a housing space for housing the adding valve, and the adding valve is housed in the housing space. Also, a metal powder is filled between the adding valve and the heat dissipating member, with the adding valve housed in the housing space.

According to this structure, metal powder that has high thermal conductivity is filled between the heat dissipating member and the adding valve housed in the housing space, so the heat of the adding valve is able to be efficiently transferred to the heat dissipating member through the metal powder. Also, the heat conducting member arranged between the adding valve and the heat dissipating member is metal in powder form. According to this structure, the gap (i.e. unfilled space) between the adding valve and the heat dissipating member is able to be reduced compared with a case in which a heat conducting member of a shape corresponding to this space is arranged there. That is, according to this structure, metal powder that has high thermal conductivity is able to be filled between the adding valve and the heat dissipating member, and the gap between the adding valve and the heat dissipating member is reduced. Therefore the heat of the adding valve is able to be efficiently transferred to the heat dissipating member, and the heat of the adding valve is able to be efficiently dissipated through the heat dissipating member. Furthermore, the metal powder is any one of aluminum powder and copper powder. According to this structure, these metal powders have high thermal conductivity, and are thus able to effectively dissipate the heat of the adding valve. In addition, these metal powders are easy to obtain, so the invention can be realized easily.

In the heat dissipating structure described above, aqueous urea may be selected as the reducing agent, and a first heat insulating member may be arranged at a portion between the heat dissipating member and a tip end portion of the adding valve where a nozzle hole of the adding valve is arranged, between the adding valve and the heat dissipating member.

When the temperature near the nozzle hole of the adding valve is low, urea is deposited near the nozzle hole, forming deposits which reduce the dispersibility of the aqueous urea that is injected from the adding valve. As a countermeasure to this, with the structure described above, the first heat insulating member is arranged between the heat dissipating member and the tip end portion of the adding valve where the nozzle hole of the adding valve is arranged. According to this structure, the area near the nozzle hole of the adding valve dissipates heat through the heat dissipating structure, so the temperature there is inhibited from decreasing, which in turn inhibits urea from being deposited there. As a result, the dispersibility of the aqueous urea that is injected from the adding valve is able to be ensured, while protecting the adding valve from being harmed by heat.

Moreover, the heat dissipating member may be attached to the exhaust duct via a second heat insulating member. According to this structure, the heat of the exhaust conduit is able to be inhibited from being transferred to the heat dissipating member by the second heat insulating member. As a result, the efficiency with which the heat of the adding valve is dissipated through the heat dissipating member is able to be inhibited from decreasing.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view showing a frame format of a NOx control system according to one example embodiment of the invention; and
FIG. 2 is a view showing a frame format of an adding valve, and the sectional structure of an exhaust duct and a heat dissipating member according to the example embodiment.

### DETAILED DESCRIPTION OF EMBODIMENTS

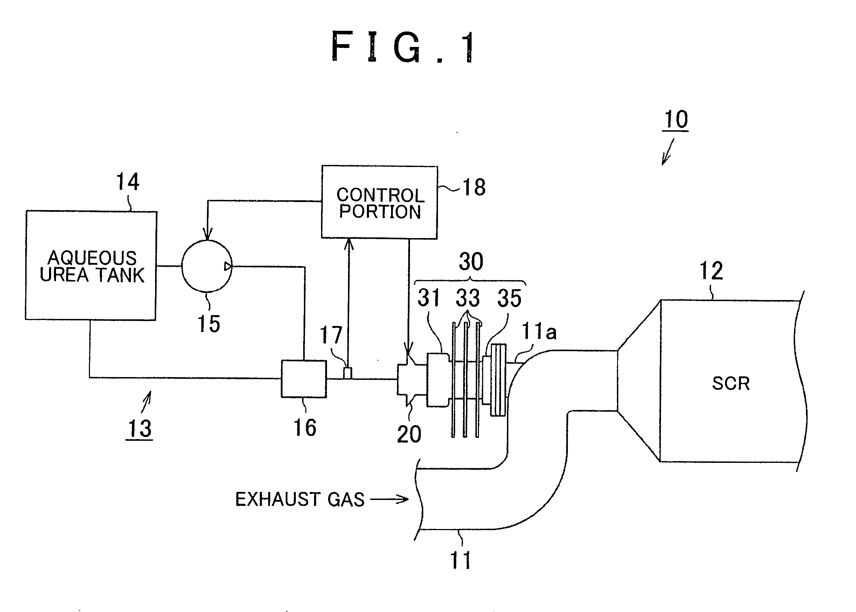

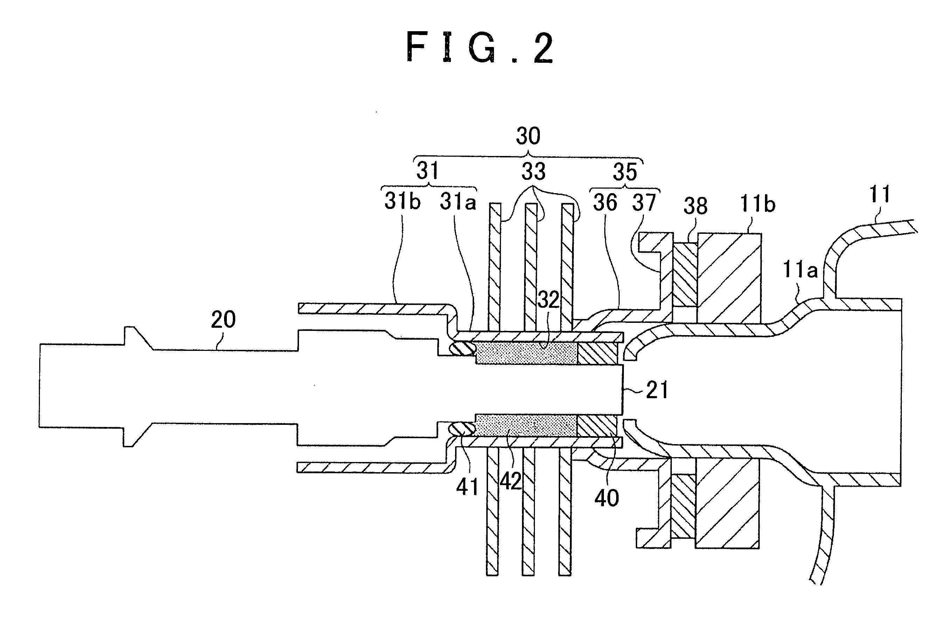

Hereinafter, an example embodiment in which the invention is applied to a heat dissipating structure of an adding valve in a selective reduction type NOx control system that purifies NOx in exhaust gas from an internal combustion engine, will be described with reference to FIGS. 1 and 2.

As shown in FIG. 1, in a NOx control system 10 of an internal combustion engine, exhaust gas discharged from a combustion chamber of the internal combustion engine flows through an exhaust duct 11. The NOx control system 10 includes a selective reduction type NOx purifying catalyst (hereinafter, referred to as "SCR (Selective Catalytic Reduction) catalyst") 12, and an adding valve 20 provided upstream of the SCR catalyst 12 in the exhaust duct 11.

The adding valve 20 is attached to the exhaust duct 11 via a heat dissipating member 30 that will be described later. An aqueous urea supplying apparatus 13 is connected to the adding valve 20. The aqueous urea supplying apparatus 13 includes an aqueous urea tank 14 within which aqueous urea (that corresponds to a urea aqueous solution) is stored, a pressure pump 15 that delivers (i.e., pumps) the aqueous urea in the aqueous urea tank 14 to the adding valve 20, and a regulator valve 16 that regulates the supply pressure of the aqueous urea.

A control portion 18 executes various controls of the internal combustion engine. The control portion 18 receives signals output from various sensors that detect the state of the internal combustion engine, and drives various devices of the internal combustion engine based on the received signals and the like. The control portion 18 drives (i.e., controls) the pressure pump 15 and controls the opening amount of the regulator valve 16 so that the supply pressure of the aqueous urea becomes a pressure appropriate for purifying NOx, based on an output signal of a pressure sensor 17 provided in an aqueous urea supply line. The detailed operation of this control will now be described. First, aqueous urea in the aqueous urea tank 14 is pumped to the adding valve 20 by driving the pressure pump 15. Excess aqueous urea is then returned to the aqueous urea tank 14 by the regulator valve 16 so that the supply pressure of the aqueous urea becomes an appropriate pressure. Then when the control portion 18 opens the adding valve 20, the aqueous urea is injected into the exhaust duct 11 from the adding valve 20.

The aqueous urea injected into the exhaust gas in this way becomes heated in the exhaust gas, such that the urea hydrolyzes, creating ammonia. As a result, the ammonia is adsorbed to the SCR catalyst 12. Then when the NOx in the exhaust gas passes through the SCR catalyst 12, it is reduced to nitrogen and water by the ammonia. Some of the ammonia directly reduces the NOx in the exhaust gas without being adsorbed to the SCR catalyst 12.

Next, the heat dissipating structure of the adding valve 20 according to this example embodiment will be described with reference to FIGS. 1 and 2. FIG. 2 is a side view of the sectional structure of the heat dissipating member 30 and the exhaust duct 11, and the adding valve 20 that is arranged in the heat dissipating member 30.

As shown in FIG. 1, a branch portion 11a is arranged in the exhaust duct 11, near a portion where the SCR catalyst 12 is provided, and the heat dissipating member 30 is attached to this branch portion 11a, as will be described later. The branch portion 11a has a generally cylindrical shape as shown in FIG. 1, and extends in a direction toward the SCR catalyst 12. A passage inside the branch portion 11a is communicated with the inside of the exhaust duct 11, as shown in FIG. 2. A disc-like flange 11b is joined to an outer peripheral surface of the branch portion 11a, as shown in FIG. 2.

The heat dissipating member 30 is made of stainless steel. Also, the heat dissipating member 30 includes a generally cylindrical housing 31, a plurality of cooling fins 33 formed on an outer peripheral surface of the housing 31, and a mounting portion 35 for mounting the housing 31 to the branch portion 11a.

The inside of the housing 31 is a housing space 32 for housing the adding valve 20. The housing 31 includes a tip end portion 31a positioned on the exhaust duct 11 side, and a base end portion 31b. The base end portion 31b has a larger diameter than the tip end portion 31a. The cooling fins 33 are disc-shaped, and are integrally formed with the outer peripheral surface of the tip end portion 31a of the housing 31, or are joined to the outer peripheral surface of the tip end portion 31a.

The mounting portion 35 includes a generally cylindrical joining portion 36, and a disc-like flange portion 37 that is connected substantially perpendicular to the joining portion 36. The joining portion 36 has a cylindrical shape that is slightly larger than the cylindrical shape of the tip end portion 31a of the housing 31, and is joined to the tip end portion 31a while covering a tip end of the tip end portion 31a. The flange portion 37 of the mounting portion 35 is fastened by bolts, via an insulating gasket 38 that serves as a second heat insulating member, to the flange 11b that is joined to the branch portion 11a of the exhaust duct 11. The insulating gasket 38 is made of mica.

The adding valve 20 is arranged in the housing space 32 inside the housing 31. More specifically, a portion of the adding valve 20 that is on a tip end (i.e., an end portion in which a nozzle hole 21 is formed) side of the adding valve 20 is housed in a space corresponding to the tip end portion 31a of the housing 31, of the housing space 32. The position of the nozzle hole 21 corresponds to a tip end of the housing 31. The nozzle hole 21 is arranged in the axial center of the adding valve 20, on the side surface on the tip end side (i.e., the exhaust duct 11 side in FIG. 2) of the adding valve 20. Also, a base end-side portion of the adding valve 20 is housed in a space that is surrounded by the base end portion 31 b of the housing 31, of the housing space 32.

In the housing space 32 of the housing 31, an insulating collar 40 and an O-ring 41 are arranged between the tip end portion 31a of the housing 31 and the adding valve 20. More specifically, the insulating collar 40 is arranged in a position near the tip end of the adding valve 20 where the nozzle hole 21 of the adding valve 20 is arranged, i.e., near the tip end of the housing 31, and the O-ring 41 is arranged in a position near the base end portion 31b. The insulating collar 40 is made of ceramic that has been processed into a heat insulator. Also, copper powder 42 that is metal powder is filled between the tip end portion 31a of the housing 31 and the adding valve 20, as well as between the insulating collar 40 and the O-ring 41.

Next, a method for attaching the adding valve 20 and the heat dissipating member 30 to the exhaust duct 11 will be described. First, the adding valve 20 is arranged inside the heat dissipating member 30. At this time, the nozzle hole 21 of the adding valve 20 is arranged so as to correspond to the tip end of the housing 31 of the heat dissipating member 30. Then, the O-ring 41 is arranged between the adding valve 20 and the tip end portion 31a of the housing 31, in a position near the base end portion 31b. Next, the copper powder 42 is filled in between the tip end portion 31 a of the housing 31 and the adding valve 20 from the tip end side (i.e., the mounting portion 35 side) of the housing 31. Next, the insulating collar 40 is inserted and press-fit between the adding valve 20 and the tip end portion 31a of the housing 31 from the tip end side of the housing 31. As a result, the adding valve 20 is fixed to the heat dissipating member 30, and the copper powder 42 is filled in the housing space 32. Then, with the adding valve 20 housed in the heat dissipating member 30 in this way, the flange portion 37 of the mounting portion 35 is fastened by bolts via the insulating gasket 38 to the flange 11b that is joined to the branch portion 11a of the exhaust duct 11. The adding valve 20 and the heat dissipating member 30 are attached to the exhaust duct 11 by this process.

Next, the operation of this example embodiment will be described. Aqueous urea is injected from the adding valve 20 into the exhaust duct 11 under the control of the control portion 18 while the internal combustion engine is operating. As a result, NOx is reduced to nitrogen and water by ammonia in the exhaust gas and the SCR catalyst 12. High temperature exhaust gas flows through the exhaust duct 11. The high temperature heat of this exhaust gas is transferred to the tip end (i.e., the nozzle hole 21) side of the adding valve 20. Then the heat transferred to the adding valve 20 from the exhaust gas is transferred to the housing 31 through the copper powder 42 that is filled in the housing space 32 of the housing 31 of the heat dissipating member 30, and is dissipated outside via the cooling fins 33. Also, the insulating collar 40 is arranged in the housing space 32, near the nozzle hole 21 of the adding valve 20. With this structure, the heat of this portion is not easily dissipated to the housing 31, so a high temperature is maintained. Also, even though high temperature exhaust gas flows through the exhaust duct 11, the heat dissipating member 30 is connected to the exhaust duct 11 via the insulating gasket 38, so the heat of the exhaust gas will not easily be transferred to the heat dissipating member 30.

With the example embodiment described in detail above, effects (1) to (5) described below are able to be obtained.
(1) The heat dissipating structure of the adding valve 20 of this example embodiment includes the adding valve 20 that adds a reducing agent into the exhaust duct 11 of the internal combustion engine, and the heat dissipating member 30 that dissipates the heat of the adding valve 20. The heat dissipating member 30 has the housing space 32 for housing the adding valve 20, and the adding valve 20 is housed in this housing space 32. Also, the copper powder 42 as metal powder is filled between the adding valve 20 and the heat dissipating member 30, with the adding valve 20 housed in the housing space 32. Because the copper powder 42 that has high thermal conductivity is filled between the adding valve 20 and the heat dissipating member 30 in the housing space 32 of the heat dissipating member 30 in this way, the heat of the adding valve 20 is able to be efficiently transferred to the heat dissipating member 30 through the copper powder 42. Also, the gap between the adding valve 20 and the heat dissipating member 30 is able to be reduced compared with a case in which a heat conducting member of a shape corresponding to this space 32 is arranged between the adding valve 20 and the heat dissipating member 30. That is, the copper powder 42 that has high thermal conductivity is able to be filled between the adding valve 20 and the heat dissipating member 30, and the gap between the adding valve 20 and the heat dissipating member 30 is reduced. Therefore the heat of the adding valve 20 is able to be efficiently transferred to the heat dissipating member 30, and the heat of the adding valve 20 is able to be efficiently dissipated through the heat dissipating member 30.
(2) The copper powder 42 is filled between the adding valve 20 and the heat dissipating member 30 in the housing space 32 of the heat dissipating member 30. As a result, the heat of the adding valve 20 is able to be efficiently dissipated using material that has high thermal conductivity and is easily obtainable.
(3) Aqueous urea is injected as the reducing agent from the adding valve 20. Also, the insulating collar 40 is arranged between the heat dissipating member 30 and the tip end portion of the adding valve 20 where the nozzle hole 21 of the adding valve 20 is formed, in the housing space 32 formed in the heat dissipating member 30. When the temperature near the nozzle hole 21 of the adding valve 20 is low, urea is deposited near the nozzle hole 21, forming deposits which reduce the dispersibility of the aqueous urea that is injected from the adding valve 20. As a countermeasure to this, in this example embodiment, the insulating collar 40 is arranged between the adding valve 20 and the heat dissipating member 30, near the nozzle hole 21 of the adding valve 20. The area near the nozzle hole 21 of the adding valve 20 dissipates heat through the heat dissipating member 30, so the temperature there is inhibited from decreasing, which in turn inhibits urea from being deposited there. As a result, the dispersibility of the aqueous urea that is injected from the adding valve 20 is able to be ensured, while protecting the adding valve 20 from being harmed by heat.
(4) The insulating collar 40 is made of ceramic. Because the insulating collar 40 is made of ceramic that is a highly rigid heat insulator in this way, when sealing in and pressing (compressing) the copper powder 42 that has been filled into the housing space 32 with the insulating collar 40, the insulating collar 40 is able to sufficiently withstand this pressing (compressing) process.
(5) The heat dissipating member 30 is attached to the exhaust duct 11 via the insulating gasket 38. As a result, the heat of the exhaust duct 11 is able to be inhibited from being transferred to the heat dissipating member 30 by the insulating gasket 38. Thus, the efficiency with which the heat of the adding valve 20 is dissipated through the heat dissipating member 30 is able to be inhibited from decreasing. Also, because the heat of the exhaust duct 11 is dissipated, urea of the aqueous urea that is injected into the exhaust duct 11 can be inhibited from being deposited inside the exhaust duct 11 and forming deposits there.

The invention is not limited to the mode described in the example embodiment above. That is the invention may also be carried out in a modified mode such as that described below. The specific structural aspects of the adding valve and heat dissipating member illustrated in the above example embodiment, as well as the materials of which they are made are not particularly limited.

For example, in the above example embodiment, copper powder is filled between the tip end portion of the housing and the adding valve, in the housing space of the housing of the heat dissipating member. However, copper powder may also be filled in the base end portion side of the housing between the base end portion of the housing and the adding valve. Also, in the example embodiment described above, the metal powder that is filled in the housing space is copper powder. However, the metal powder is not limited to copper powder, but may alternatively be aluminum powder or another metal powder. Also, the metal powder that is filled in the housing space may also be a mixture of a plurality of types of metal powders, such as a mixture of two types of metal powders such as copper powder and aluminum powder, for example.

Further, the material of the insulating collar is not limited to ceramic, and the material of the insulating gasket is not limited to mica. That is, other insulating material may also be used as the material of the insulating collar and the insulating gasket. Further, in the heat dissipating structure of the adding valve, the insulating collar and the insulating gasket may be omitted. If the structure is one that can compress and fix the metal powder and seal off the exhaust gas, then by filling metal powder into the housing space, the heat of the adding valve is able to be efficiently transferred to the heat dissipating member through the metal powder that is filled into the housing space.

Moreover, the heat dissipating member does not have to be made of stainless steel. Instead, the heat dissipating member may be made of another material such as an aluminum alloy. In the example embodiments described above, aqueous urea is injected as the reducing agent from the adding valve, but ammonia gas or the like may also be injected.

## Claims

1. A heat dissipating structure of an adding valve, including an adding valve (20) that adds a reducing agent into an exhaust duct (11) of an internal combustion engine, and a heat dissipating member (30) that dissipates heat of the adding valve (20), the heat dissipating member (30) having a housing space (32) for housing the adding valve (20), the adding valve (20) being housed in the housing space (32), and a metal powder (42) is filled between the adding valve (20) and the heat dissipating member (30), the metal powder (42) being any one of aluminum powder and copper powder.

2. The heat dissipating structure according to claim 1, wherein the reducing agent is aqueous urea; and a first heat insulating member (40) is arranged at a portion between the heat dissipating member (30) and a tip end portion of the adding valve (20) where a nozzle hole (21) of the adding valve (20) is arranged, between the adding valve (20) and the heat dissipating member (30).

3. The heat dissipating structure according to claim 1 or 2, wherein the heat dissipating member (30) is attached to the exhaust duct (11) via a second heat insulating member (38).

4. The heat dissipating structure according to any one of claims 1 to 3, wherein the metal powder (42) is a mixture of a plurality of types of the metal powder.

## Patentansprüche

1. Wärmeableitende Struktur eines Zugabeventils mit einem Zugabeventil (20), das ein Reduktionsmittel in den Abgaskanal (11) eines Verbrennungsmotors hinzufügt, und einem wärmeableitenden Element (30), das die Wärme des Einspritventils (20) ableitet, wobei das wärmeableitende Element (30) einen Gehäuseraum (32) für ein Unterbringen des Zugabeventils (20) hat, das Zugabeventil (20) in dem Gehäuseraum (32) untergebracht ist, und ein Metallpulver (42) zwischen Zugabeventil (20) und wärmeableitendem Element (30) eingefüllt ist, wobei das Zugabeventil (20) in dem Gehäuseraum (32) untergebracht ist, **dadurch gekennzeichnet, dass** das Metallpulver (42) irgend ein Pulver eines Aluminiumpulvers und eines Kupferpulvers ist.

2. Wärmeableitende Struktur nach Anspruch 1, wobei das Reduktionsmittel ein wässriger Harnstoff ist; und ein erstes wärmeisolierendes Element (40) an einem Abschnitt zwischen dem wärmeableitenden Element (30) und einem Zugabeventil-Spitzendabschnitt, bei dem eine Düsenöffnung (21) des Zugabeventils (20) liegt, zwischen dem Zugabeventil (20) und dem wärmeableitenden Element (30) angeordnet ist.

3. Wärmeableitende Struktur nach Anspruch 1 oder 2, wobei das wärmeableitende Element (30) an dem Abgaskanal (11) über ein zweites wärmeisolierendes Element (38) befestigt ist.

4. Wärmeableitende Struktur nach einem der Ansprüche 1 bis 3, wobei das Metallpulver (42) eine Mischung von mehreren Arten Metallpulver ist.

## Revendications

1. Structure de dissipation de chaleur d'une valve d'injection, comprenant une valve d'injection (20) qui ajoute un agent de réduction dans un conduit d'échappement (11) d'un moteur à combustion interne, et un élément de dissipation de chaleur (30) qui dissipe la chaleur de la valve d'injection (20), l'élément de dissipation de chaleur (30) ayant un espace de logement (32) pour loger la valve d'injection (20), la valve d'injection (20) étant logée dans l'espace de logement (32) et une poudre métallique (42) est versée entre la valve d'injection (20) et l'élément de dissipation de chaleur (30), la poudre métallique (42) étant l'une quelconque parmi une poudre d'aluminium et une poudre de cuivre.

2. Structure de dissipation de chaleur selon la revendication 1, dans laquelle l'agent de réduction est l'urée aqueuse ; et un premier élément isolant thermique (40) est agencé au niveau d'une partie entre l'élément de dissipation de chaleur (30) et une partie d'extrémité de pointe de la valve d'injection (20) où est agencé un trou de buse (21) de la valve d'injection (20), entre la valve d'injection (20) et l'élément de dissipation de chaleur (30).

3. Structure de dissipation de chaleur selon la revendication 1 ou 2, dans laquelle l'élément de dissipation de chaleur (30) est fixé sur le conduit d'échappement (11) via un second élément d'isolation thermique (38).

4. Structure de dissipation de chaleur selon l'une quelconque des revendications 1 à 3, dans laquelle la poudre métallique (42) est un mélange d'une pluralité de types de poudre métallique.
